# EUROPEAN PATENT APPLICATION

(11) **EP 1 961 692 A2**
(43) Date of publication of application: **27.08.2008**
(21) Application number: 07016875.2
(22) Date of filing: 28.08.2007
(51) Int. Cl.: B66F 9/06, B66F 9/14

(54) **Expandable load bed for a hand truck**

(30) Priority: 20.02.2007 US 708372
(71) Applicant: Figueroa, Cesar, Pompano Beach FL 33060 (US); Romash, Rick, Fort Lauderdale FL 33305 (US)
(72) Inventor: Figueroa, Cesar, Pompano Beach FL 33060 (US); Romash, Rick, Fort Lauderdale FL 33305 (US)
(74) Representative: Jehle, Volker Armin

(57) **Abstract**

A load bed (35) for a hand truck which expands for transporting wide loads with stability. The load bed includes a central rack assembly (40) flanked by a pair of movable sections (41). The movable sections (41) include vertically extending slats (75) with side lift plates (80) proximate to the lower ends. The movable sections have sliding inserts (85) which are horizontally oriented and aligned for being received within horizontally oriented channels on the central rack assembly. A manually operable drive assembly urges the sliding inserts within the channels to slide the movable sections horizontally to expand and contract the load bed. The side lift plates slidably rest on the center lift plate of the hand truck and move with the movable sections for providing support to a load over the width of the expanded load bed.

## Description

### Cross-Reference to Related Application

This application claims the benefit of copending United States Provisional Patent Application Serial No. 60/774,781, filed February 18, 2006, which is incorporated herein in its entirety.

### Background of the Invention

### Field of the Invention

The present invention generally relates to hand trucks for shifting heavy and/or bulky loads, and more particularly, to an expandable load bed for a hand truck which may be extended to better accommodate wide loads and which may be contracted to assume the relatively narrow width of a conventional hand truck.

### Description of the Prior Art

Hand trucks have long been used for quickly and easily moving heavy and/or bulky loads. Typically, a hand truck has an upright frame and is constructed of tubular aluminum to provide strength with minimal weight. At the lower end of the frame, brackets are attached to the rear face for holding an axle. A pair of wheels is rotatably mounted on the ends of the axle. A forwardly extending lift plate is attached to the front face, at the lower end. A curved portion of the frame, at the upper end, forms a handle for grasping maneuvering and propelling the hand truck.

A user may position the hand truck in an upright position and shove the hand truck forward so that the lift plate passes under a load. The user may then tilt the hand truck backward on its wheels so that the load leans against the frame and is supported by the lift plate. The user may push or pull the handle to steer and propel the hand truck on its wheels. The hand truck is particularly versatile because the user may raise the handle to position the load in a more upright orientation or lower the handle to position the load in a more horizontal orientation, all while continuing to move the hand truck on its wheels. In an upright orientation, the hand truck may be turned sharply to pass from a hallway, through a doorway and into a room. In a horizontal orientation, the hand truck may avoid low overhead obstructions and traverse stairways.

Hand trucks can carry loads through narrow hallways, on stairways and on ramps used for loading trucks. Pallets of material or stacks of containers may be easily lifted and moved using a hand truck. In order to serve these needs, the hand truck frame is typically relatively narrow for turning corners in buildings, passing through doorways, and negotiating other narrow passages. When a hand truck is used to transport bulky loads, it would be an advantage to have a wider frame to more fully support the load; however, greater width is a drawback when the hand truck is used to negotiate a narrow passage with a relatively narrow load.

There is a need for a wide load bed which can be easily attached to the frame of a hand truck for carrying wide loads and can be removed when not needed.

There is also a need for an expandable hand truck load bed which can be mounted on a conventional hand truck frame where it may be expanded or contracted to accommodate wide or narrow loads.

### Summary of the Invention

The present invention is directed to an expandable load bed for a hand truck which may be alternately expanded and contracted to accommodate wide loads or to have a relatively narrow width for negotiating narrow passages or for storage. The expandable load bed is configured for secure yet removable attachment on a conventional hand truck, which comprises a vertically extending planar frame having an upper end and a lower end. The frame has a front face and a rear face. A wheel assembly is affixed to the rear face of the frame proximate to the lower end. The wheel assembly includes at least one bracket, supporting at least one axle, and a plurality of rotatably mounted wheels, on the axle, for rolling the hand truck. A handle is formed on the frame proximate to the upper end, for guiding and manipulating the hand truck. A center lift plate is mounted on the frame proximate to the lower end and extends forward from the front face. The load bed is configured for mounting on the front face of the frame. The load bed comprises a central rack assembly and at least one but preferably two movable sections. The central rack assembly comprises a plurality of channels and a plurality of rigid support members. The channels are aligned in a generally horizontal orientation. The channels and the support members are joined together in a generally co-planer unitary construct. The movable sections each comprise at least one vertically extending rigid slat and a plurality of sliding inserts. The sliding inserts are aligned in a generally horizontal orientation. The sliding inserts and the slat are joined together in a generally co-planer unitary construct. Each of the sliding inserts is positioned and configured for slidably entering a one of the channels and the channels are configured for slidably receiving the inserts in a snug fitting relation. The movable section includes a rigid perpendicularly extending side lift plate. The central rack assembly is provided with means for secure and releasable attachment to the hand truck frame.

It is preferred that one movable section is disposed on the right side of the central rack assembly and that the other of the movable sections is disposed on the left side of the central rack assembly, with the sliding inserts of each movable section inserted within corresponding channels so that each movable section may be outwardly displaced with respect to the central rack assembly to expand the width of the load bed. A manually operable drive assembly is provided for easily expanding and contracting the load bed. The wider expanded load bed can more easily support wider loads. The movable sections may be returned to a contracted position, when needed, to take advantage of the relatively narrow width of the conventional hand truck.

It is an object of the present invention to provide a load bed for a hand truck which can be expanded horizontally to accommodate a relatively wide load and can be removed from the hand truck when not needed.

It is another object of the present invention to provide an expandable load bed for a conventional hand truck which can be expanded incrementally to accommodate a relatively wide load and can be contracted to assume the relatively narrow width of a conventional hand truck.

It is a further object of the present invention to provide an expandable load bed for a hand truck which can expand to accommodate a wide load and contract for convenient and compact storage.

These and other objects, features and advantages of the present invention will become more readily apparent from the attached drawings and the detailed description of the preferred embodiments, which follow.

### Brief Description of the Drawings

The invention will be further understood, by way of example, with reference to the accompanying drawings, in which:

Figure 1a is a front perspective view of an expandable load bed of the present invention.

Figure 1b is a front perspective view of an expandable load bed of the present invention with a hand truck shown in phantom.

Figure 2 is a perspective exploded view of a load bed of the present invention.

Figure 3 is a perspective view of a central rack assembly of the present invention.

Figure 4 is a perspective view of a right movable section of the present invention.

Figure 5 is a perspective view of a sliding insert of the present invention.

Figure 6 is a perspective view of a sliding insert with a gear strip of the present invention.

Figure 7 is an exploded view showing a turning handle, disk, gear teeth, shaft and plate of the present invention.

Figure 8a is a front elevation view of a load bed of the present invention in contracted state.

Figure 8b is a front elevation view of a load bed of the present invention in expanded state.

### Detailed Description of the Preferred Embodiments

Shown throughout the drawings, the present invention is generally directed towards a load bed, for a hand truck. The load bed can expand horizontally to accommodate a load which is wider than the hand truck. The expanded load bed allows a wider load to be carried with more thorough support and enhanced stability. The load bed can be contracted for use with narrow loads and in narrow passages. In the contracted state, a hand truck, with the load bed attached, may be conveniently stored.

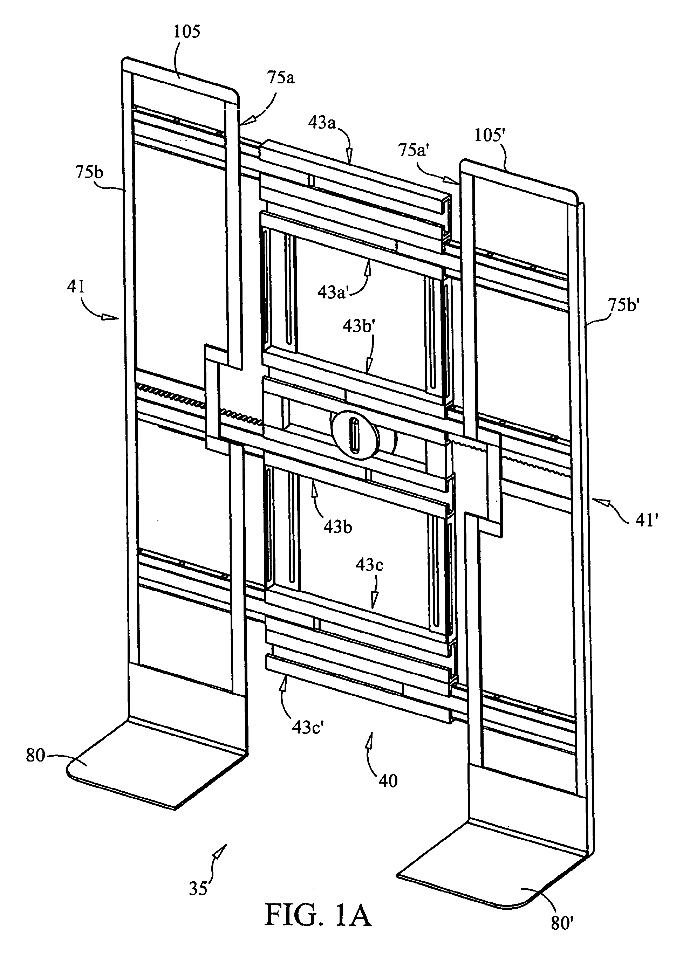

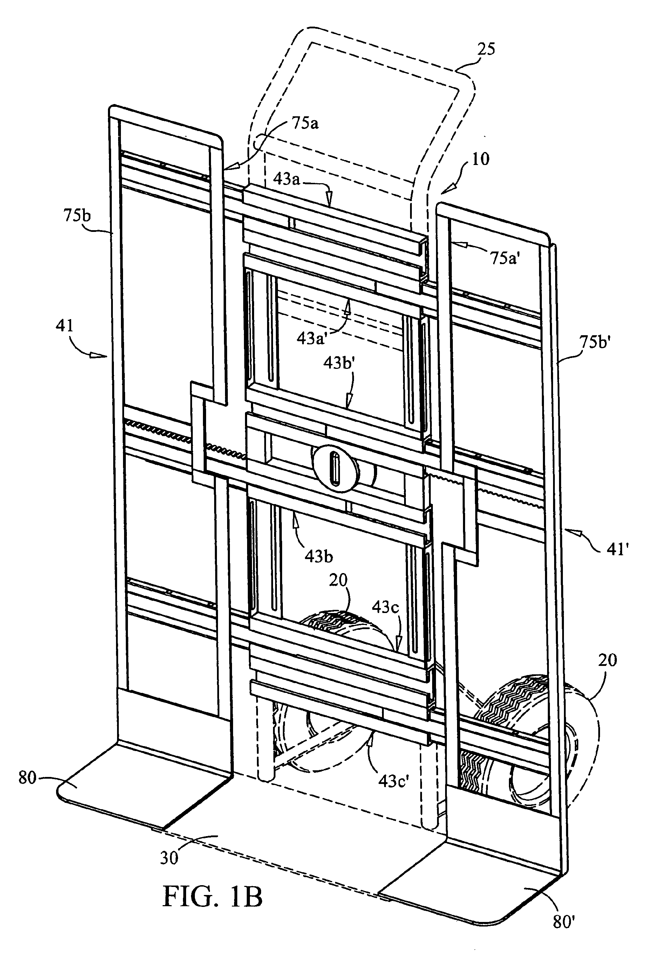

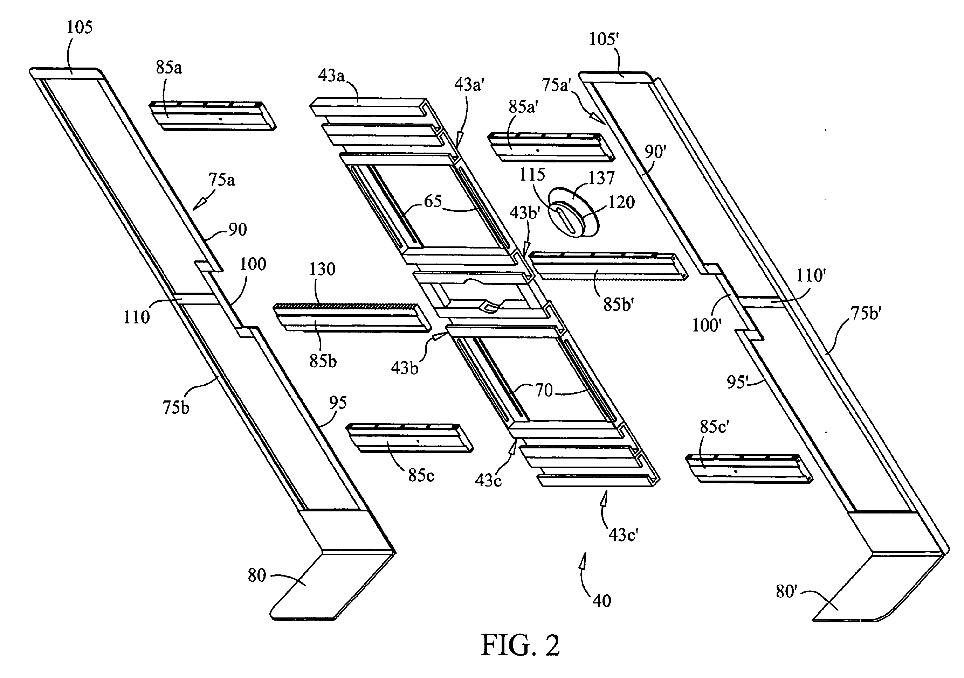

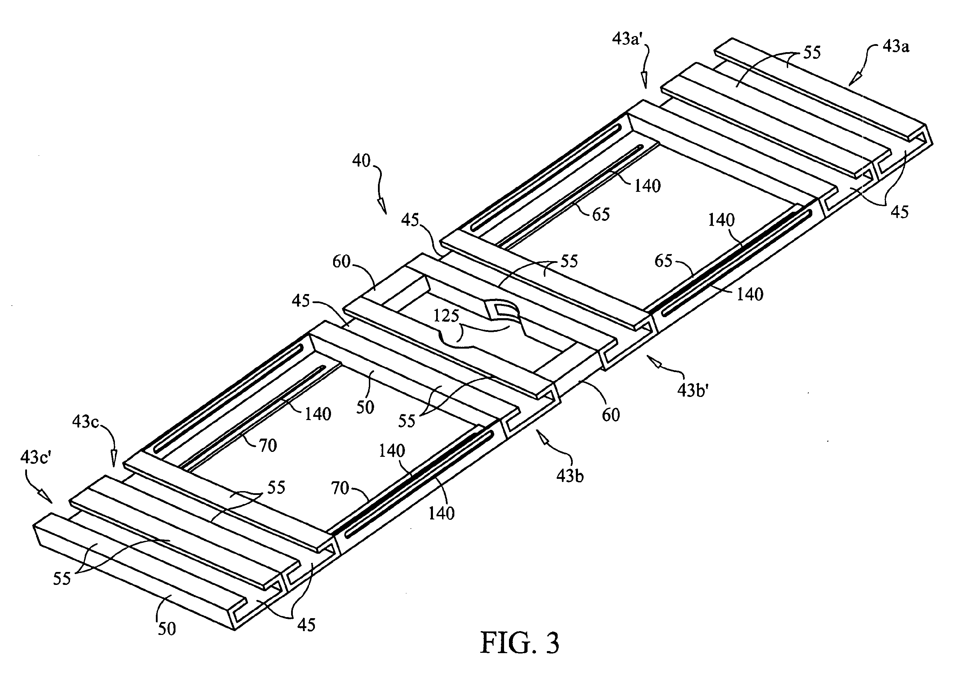

The expandable load bed **35,** as depicted in Figure 1a, is comprised of a central rack assembly **40,** flanked by a pair of movable sections, namely a right movable section **41,** and a left movable section **41'.** Figure 1b shows the expandable load bed **35** mounted on a hand truck indicated by dotted lines. The central rack assembly **40** is a vertically extending planar construct of co-joined channels, and rigid support members, as shown in Figures 2 and 3, preferably formed of a lightweight metal such as aluminum. The channels are positioned in a generally horizontal orientation and preferably include a right upper channel **43a,** a left upper channel **43a'** a right middle channel **43b,** a left middle channel **43b',** a right lower channel **43c,** and a left lower channel **43c'.** Each of the channels includes an elongated flat base **45** of generally rectangular shape, two elongated sides **50,** running the length of the base **45** and extending from opposite edges of the base **45** in generally perpendicular relation thereto. A pair of flanges **55** is provided on each of the channels. The flanges **55** are coextensive with the sides **50** and extend from the sides **50** in spaced apart relation to the base **45.** The flanges **55** extend toward each other, in parallel with the base **45,** to provide open-ended channels with flanges **55** opposing the base **45.**

The right upper channel **43a** and the left upper channel **43a'** are positioned in adjacent side-by-side relation and securely joined, to form an upper set of channels. The right middle channel **43b** and the left middle channel **43b'** are positioned in side-by-side spaced apart relation. The support members preferably include a pair of spacers **60,** spanning the distance between the right middle channel **43b** and the left middle channel **43b'.** Each end of the right middle channel **43b** is joined to a one of the pair of spacers **60.** Likewise, each end of the left middle channel **43b'** is joined to one of the pair of spacers **60,** to form a middle set of channels. The lower right channel **43c** and the lower left channel **43c'** are positioned and joined in the same fashion as the upper right channel **43a** and the upper left channel **43a',** to form a lower set of channels. Additional support members are preferably L-shaped girders. A first pair of L-shaped girders **65** extends downward from the upper set of channels and joins the upper set of channels to the middle set of channels. A second pair of L-shaped girders **70** extends downward from the middle set of channels and joins the middle set of channels to the lower set of channels. Joining may be accomplished by welding, gluing, or other conventional means of fastening.

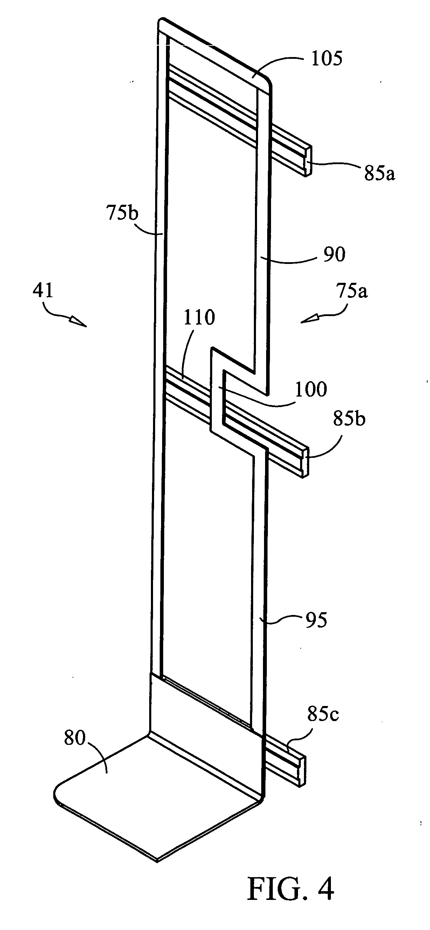

The right movable section **41** and a left movable section **41',** are the mirror image of each other and have a front and a rear. The right movable section **41,** as shown in Figure 4, includes an upright right inner slat **75a,** and an upright right outer slat **75b,** together with a set of sliding inserts, and a right side lift plate **80,** as shown in Figure 4. The sliding inserts are preferably an upper right sliding insert **85a,** a middle right sliding insert **85b** and a lower right sliding insert **85c.** The right inner slat **75a** and the right outer slat **75b** are aligned in spaced apart generally parallel relation and may be formed of the same material used for forming the hand truck frame. The right inner slat **75a** is divided into a right upper portion **90** and a right lower portion **95.** The right upper portion **90** and the right lower portion **95** are connected by a co-planer right bridge **100.** The right bridge **100** is formed in the general shape of a letter "C" and connects the right upper portion **90** to the right lower portion **95** so as to leave an open area in the path of the longitudinal axis of the right inner slat **75a.** The right inner slat **75a** and the right outer slat **75b** are joined by a right first cross member **105,** a right second cross member **110** and by the right side lift plate **80.** The right first cross member **105** extends between the right inner slat **75a** and the right outer slat **75b** proximate to an upper end of the right movable section **41.** The right side lift plate **80** extends between the right inner slat **75a** and the right outer slat **75b** proximate to a lower end of the right movable section **41** and the right second cross member **110** extends between the right inner slat **75a** and the right outer slat **75b** at an intermediate location, preferably extending from the right bridge **100** to the right outer slat **75b,** as shown in Figures 2 and 4. It is preferred that the right side lift plate **80** extend forwardly from the lower end of the right movable section **41** and have an upturned portion at the rear, in the manner of a conventional hand truck lift plate. Joining may be accomplished by welding, gluing or by other known means for fastening metal. The left movable section **41'** is configured in the same manner and includes corresponding components namely an upright left inner slat **75a',** an upright left outer slat **75b',** a left side lift plate **80',** an left upper sliding insert **85a',** a left middle sliding insert **85b',** a left lower sliding insert **85c',** a left upper portion **90',** a left lower portion **95',** a left bridge **100',** a left first cross member **105',** and a left second cross member **110'.** It is preferred that the right outer slat **75b** and the left outer slat **75b'** be formed with an L-shaped cross section to increase rigidity.

The sliding inserts are preferably horizontally oriented and, as to the right movable section **41,** are attached to the rear aspects of the right inner slat **75a** and the right outer slat **75b.** The sliding inserts are positioned for slidable engagement with the channels. As shown in Figure 1a, the right upper sliding insert **85a** is received into the right upper channel **43a,** the right middle sliding insert **85b** is received into the right middle channel **43b,** and the right lower sliding insert **85c** is received into the right lower channel **43c.** The channels are configured to receive the sliding inserts in snug fitting sliding engagement for retaining the right movable section **41,** in sliding engagement on a right side of a hand truck. It is preferred that the sliding inserts be provided with an integral longitudinal ridge designed for filling the space between the flanges **55,** of the channels and for providing a convenient attachment point for the slats, as shown in Figure 4. The left movable section **41'** is slidably engaged on the left side of the hand truck, in like manner with left upper sliding insert **85a'** being received into the left upper channel **43a',** the left middle sliding insert **85b'** being received into the left middle channel **43b',** and the left lower sliding insert **85c'** being received into the left lower channel **43c'.** The sliding inserts may preferably be formed of rigid material such as aluminum. It will be appreciated by those skilled in the art that other numbers of sets of channels and sliding inserts would be suitable, for use in the present invention.

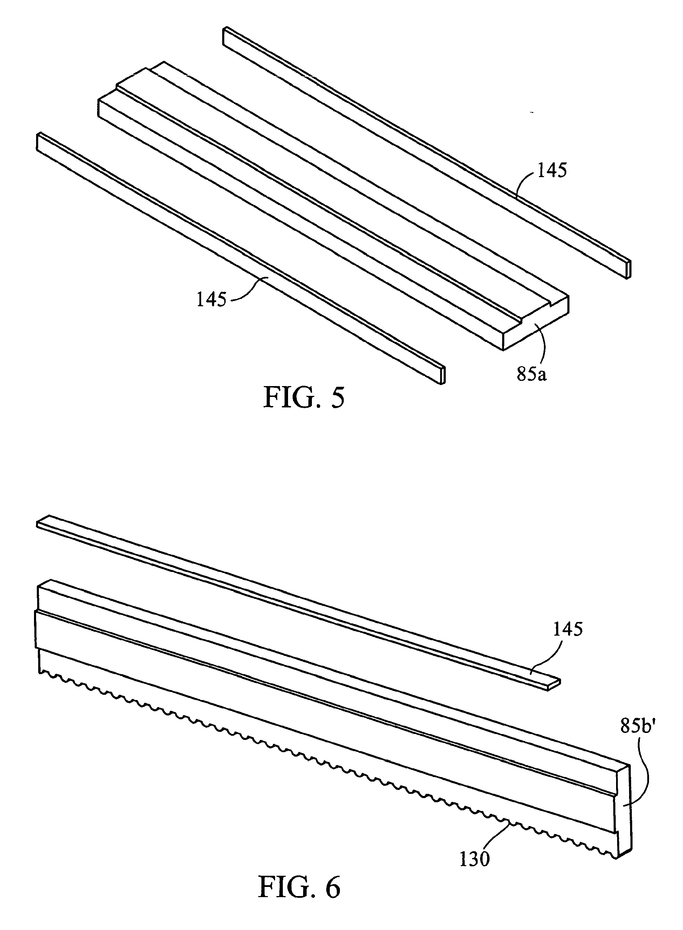

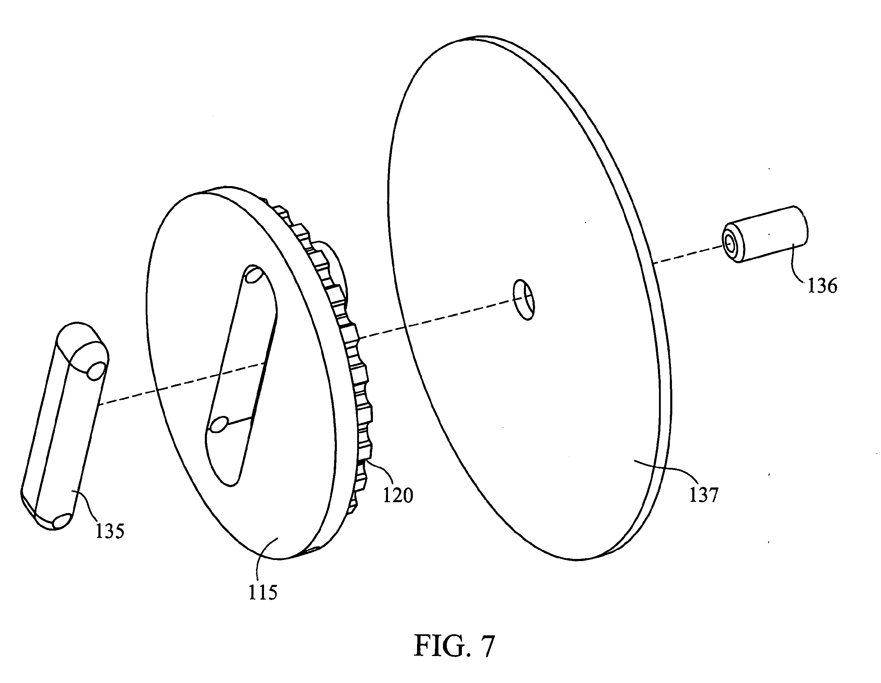

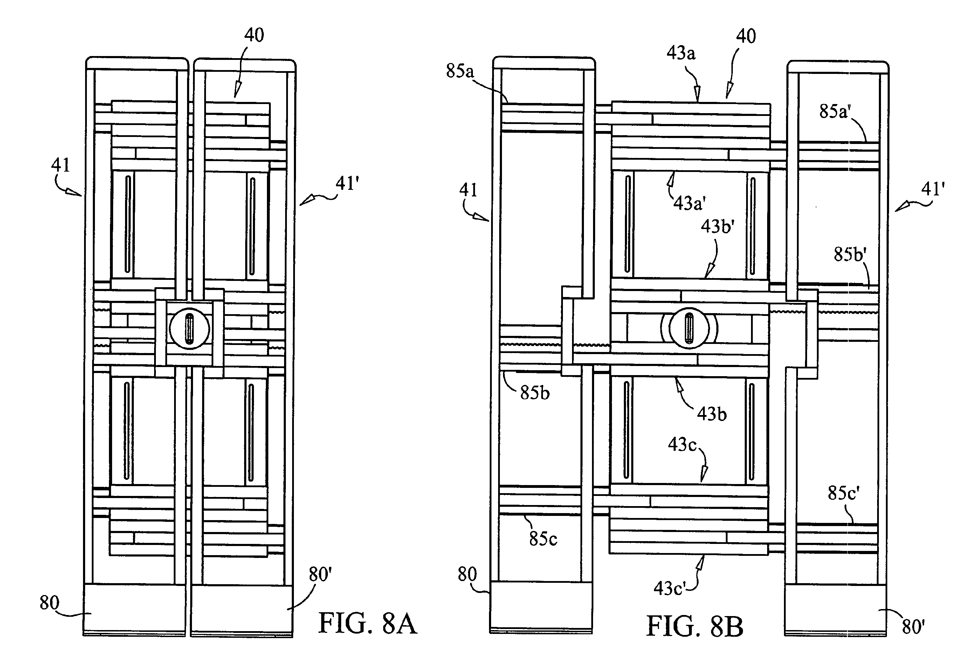

It is preferred that a manually operable drive assembly be provided for urging the right movable section **41** and the left movable section **41'** from contracted to expanded state and returning. A rotatable disk **115** is mounted between the right middle channel **43b** and the left middle channel **43b'.** The disk **115** is provided with a circumferential run of uniformly spaced gear teeth **120.** The right middle channel **43b** and the left middle channel **43b'** are each provided with one of a pair of cut outs **125** on a surface facing the disk **115,** as shown in Figure 3. The diameter of the disk **115** and the shape of the cut outs **125** are selected so as to allow the gear teeth **120** to proceed within the cut outs **125** as the disk **115** is rotated. The right and left middle sliding inserts **85b** and **85b'** are each provided with a gear strip **130,** having a run of uniformly spaced notches on an edge facing the cut outs **125,** as shown in Figure 6, which depicts the left middle sliding insert, for an example, such that the gear teeth **120** engage the notches, in the cut outs **125.** Rotation of the disk **115,** in one direction will drive the right movable section **41** and the left movable section **41'** inward, in unison movement, contracting the load bed **35** and rotation of the disk **115** in the opposite direction will drive the right movable section **41** and the left movable section **41'** outward, in unison movement, expanding the load bed **35,** as illustrated in Figures 8a and 8b. It is intended that the drive assembly may be operated incrementally to expand the load bed **35** to any position within a range of movement. The open area formed by the right bridge **100** of the right movable section and the left bridge **100'** of the left movable section serve to maintain access to the disk **115** regardless of whether the load bed **35** is in a contracted state. It is preferred that a turning handle **135** be mounted on the disk **115** for convenience of use. The disk **115** is of conventional design and the turning handle **135** is preferably of the retractable pivoting type, also of conventional design. The handle **135** and the disk **115** are rotatably retained, on the central rack assembly **40** by a connecting shaft **136,** attached to the disk **115** and extending to a circular plate **137,** resting against the rear of the central rack assembly **40,** according to conventional practice, as shown in Figure 7.

A hand truck with the expandable load bed **35** of the present invention is depicted in Figure 1b. The central rack assembly **40** is preferably attached to a hand truck frame by U-bolts (not shown); however, other means of releasable attachment are also suitable. The L-shaped girders are provided with longitudinal slots **140** for receiving threaded ends of U-bolts, which are to be fastened according to conventional practice. The slots **140** extend over a substantial portion of the L-shaped girders to accommodate a wide variety of hand truck frame design.

It is preferred that low friction strips **145** be affixed to edges of the sliding inserts, which lie adjacent to the sides **50** of the channels, as shown in Figure 5. Low friction strips are preferably formed of nylon or nylon coated with Teflon ®, in order to reduce the force required to expand and contract the load bed **35** and reduce wear on moving parts.

The right and left side lift plates **80** and **80'** are sized and positioned to at least partially slideably rest on the center lift plate of the hand truck in all possible degrees of expansion of the load bed **35.** Some hand trucks are designed so as to be convertible to a four wheeled cart by rotating the frame to a horizontal position and allowing the upper part of the frame to be supported on a set of caster wheels, which are attached to the upper rear portion of the frame. The expandable load bed **35** is designed to fit on the portion of the frame which rotates to a horizontal position. The pair of wheels and a pair of caster wheels comprise the set of wheels of the four wheeled cart. The convertible hand truck can be returned to upright orientation and used as a conventional hand truck. The load bed **35** may be expanded to accommodate a wider load in both the hand truck and four wheeled cart modes of the convertible hand truck. While the preferred embodiments of the invention have been described above, it will be recognized and understood that various modifications can be made in the invention and the appended claims are intended to cover all such modifications which may fall within the spirit and scope of the invention.

## Claims

1. An expandable load bed for mounting on a hand truck having an upright frame and a forwardly extending center lift plate, comprising:
a central rack assembly and at least one movable section;
said central rack assembly comprising a plurality of rigid channels and a plurality of rigid support members;
said channels being aligned in a generally horizontal orientation;
said channels and said support members being joined together in a generally co-planer unitary construct;
said movable section comprising at least one upright slat and a plurality of sliding inserts;
said sliding inserts being aligned in a generally horizontal orientation;
said sliding inserts and said slat being joined together in a generally co-planer unitary construct;
each of said sliding inserts being positioned and configured for slidably entering a one of said channels and said channels being configured for slidably receiving said inserts in snug fitting relation;
said central rack assembly having means for secure and releasable mounting on said hand truck frame;
whereby said movable section is supported on said central rack and may be displaced horizontally with respect to said central rack by sliding said inserts within said channels thereby expanding said load bed to greater width.

2. The expandable load bed of Claim 1, wherein the said at least one movable section comprises a pair of mirror image movable sections, positioned in side-by side relation on said central rack assembly;
whereby said load bed may be expanded outward on each side by sliding both of said pair of movable sections outward.

3. The expandable load bed of Claim 1 further including a manually operable drive assembly operably connected to at least one of said sliding inserts for driving said movable section horizontally to expand and contract said load bed.

4. The expandable load bed of Claim 3 wherein:
said plurality of channels includes a set of two spaced apart channels having opposed cut outs;
said plurality of sliding inserts includes a set of two sliding inserts, each disposed within one of said set of channels and having a gear strip with uniformly spaced notches facing said cut outs;
said drive assembly including a rotatable disk mounted on said central rack assembly;
said disk having a circumferential run of uniformly spaced gear teeth configured to engage said notches;
whereby said disk may be manually rotated to urge said set of sliding inserts horizontally to expand and contract said load bed.

5. The expandable load bed of Claim 1, further including one or more side lift plates;
each of said side lift plates being attached to a lower end of at least one of said movable sections and slidably resting on said center lift plate.
